# EUROPÄISCHE PATENTSCHRIFT

(11) **EP 1 877 993 B1**
(45) Veröffentlichungstag und Bekanntmachung des Hinweises auf die Patenterteilung: **22.06.2011**
(21) Anmeldenummer: 06724590.2
(22) Anmeldetag: 26.04.2006
(51) Int. Cl.: G08G 1/0969, G01C 21/36, G09B 29/00

(54) **VERFAHREN ZUM STEUERN EINER ANZEIGEVORRICHTUNG IN EINEM KRAFTFAHRZEUG UND ANZEIGEVORRICHTUNG**
METHOD FOR CONTROLLING A DISPLAY DEVICE IN A MOTOR VEHICLE AND DISPLAY DEVICE
PROCEDE POUR COMMANDER UN DISPOSITIF D'AFFICHAGE DANS UNE AUTOMOBILE ET DISPOSITIF D'AFFICHAGE

(30) Priorität: 29.04.2005 DE 102005020151
(43) Veröffentlichungstag der Anmeldung: 16.01.2008
(73) Patentinhaber: Volkswagen Aktiengesellschaft, 38436 Wolfsburg (DE)
(72) Erfinder: WÄLLER, Christoph, 38102 Braunschweig (DE); EBERT, Andreas, 38104 Braunschweig (DE); FLIEGNER, Jens, 29399 Wahrenholz (DE); WU, Yongmei, 38442 Wolfsburg (DE); WENGELNIK, Heino, 38442 Wolfsburg (DE)
(74) Vertreter: Reitstötter - Kinzebach
(86) Internationale Anmeldenummer: PCT/EP2006/003879
(87) Internationale Veröffentlichungsnummer: WO 2006/117116

(56) Entgegenhaltungen:
- EP-A- 0 673 010
- EP-A- 1 128 163
- WO-A-03/062749
- DE-A1- 10 162 182
- US-A1- 2003 028 322
- US-A1- 2004 054 468
- PATENT ABSTRACTS OF JAPAN Bd. 2003, Nr. 12, 5. Dezember 2003 (2003-12-05) & JP 2005 010080 A (MATSUSHITA ELECTRIC IND CO LTD), 13. Januar 2005 (2005-01-13)

## Beschreibung

Die vorliegende Erfindung betrifft ein Verfahren zum Steuern einer Anzeigevorrichtung in einem Kraftfahrzeug, bei dem die Anzeigevorrichtung eine geografische Karte mit Elementen anzeigt, denen geografische Positionen zugeordnet sind und die auf der angezeigten Karte bei den ihnen zugeordneten geografischen Positionen angezeigt werden. Ferner betrifft die Erfindung eine Anzeigevorrichtung in einem Kraftfahrzeug mit einem Steuergerät, einem mit dem Steuergerät verbundenen Display, einem Speicher oder mehreren Speichern zum Speichern von Daten zur Darstellung einer geografischen Karte und zum Speichern von Elementen, denen geografische Positionen zugeordnet sind und die auf der angezeigten Karte bei den ihnen zugeordneten geografischen Positionen darstellbar sind.

Verfahren zum Steuern einer Anzeigevorrichtung bzw. Anzeigevorrichtungen werden in einem Kraftfahrzeug insbesondere in Verbindung mit Navigationssystemen eingesetzt. Solche Navigationssysteme sind in der Lage, neben detaillierten Straßenkarten eine Vielzahl von Sonderzielen (auch interessante Punkte, Points of Interest, POIs genannt) anzuzeigen. Sonderziele sind beispielsweise Elemente, die bei ihren Geopositionen in der geografischen Karte angezeigt werden. Sie umfassen z.B. Tankstellen, Restaurants und Sehenswürdigkeiten. Außerdem kann z.B. die Position eines Freundes als bewegliches Sonderziel behandelt werden. Auch ein Spargelverkauf am Straßenrand oder ein zeitweiliger Stau kann als Sonderziel behandelt werden. Üblicherweise sind die Sonderziele in Kategorien eingeordnet. Der Nutzer kann wählen, welche Kategorien er angezeigt haben möchte. In der geografischen Karte werden dann alle Sonderziele mit den ausgewählten Kategorien angezeigt. Da dies jedoch unter Umständen sehr viele Sonderziele sind, werden bei manchen Navigationssystemen die Sonderziele ab bestimmten Maßstäben ausgeblendet oder verkleinert dargestellt.

Nachteilhaft an einer solchen Darstellung der Sonderziele ist, dass der Nutzer sehr häufig die gewünschten Kategorien der Sonderziele manuell einstellen muss. Ferner werden bei einer Vielzahl ausgewählter Kategorien auch sehr viele Sonderziele gleichzeitig dargestellt, so dass der Benutzer sehr schnell die Übersicht verliert. Dabei werden alle Sonderziele dargestellt, die im sichtbaren Bereich der Karte liegen, ohne dass die Art der Sonderziele berücksichtigt wird.

Aus der DE 199 41 966 A1 ist ein Verfahren und eine Vorrichtung zur Darstellung von Wammeldungen bekannt. Eine Anzeigeeinheit eines Navigationssystems stellt eine digitale Straßenkarte dar, auf denen Sonderziele verzeichnet sind. Des Weiteren werden Wammeldungen an ihren geografischen Positionen in der digitalen Straßenkarte mittels Piktogrammen dargestellt. Aufgrund der örtlichen Verteilung der Warnmeldungen kann der Kraftfahrzeugführer die Relevanz der einzelnen Warnmeldungen für seine eigene Route sehr einfach abschätzen. Nachteilhaft an dem in dieser Druckschrift beschriebenen Verfahren ist, dass unter Umständen sehr viele Sonderziele gleichzeitig dargestellt werden, wodurch die Darstellung unübersichtlich wird.

Aus der DE 197 41 316 A1 ist eine Anzeigevorrichtung für Fahrzeuge zur Anzeige der Reichweite bekannt. Mittels eines Navigationssystems wird die Entfernung des aktuellen Fahrorts zum gewünschten Zielort berechnet. Außerdem wird berechnet, ob die vorhandene Energiemenge ausreicht, um den Zielort ohne Nachtanken zu erreichen. Ergibt sich, dass der Zielort ohne Nachtanken nicht zu erreichen ist, wird ein Hinweis auf die Tankstellen gegeben, die mit einer bestimmten Abweichung vom direkten Weg zum Zielort vorhanden sind. Die Anzeige dieser Tankstellen erfolgt auf einem Display, unabhängig von der Anzeige des Navigationssystems unter Angabe der Entfernung.

Aus der DE 696 13 653 T2 ist ein Informations-Anzeigegerät für Fahrzeuge bekannt. Bei diesem Anzeigegerät wird die Wichtigkeit von Information in Abhängigkeit von einem festgestellten Fahrzustand bewertet und die Information gemäß dem Wichtigkeitsgrad angezeigt. Nachteilhaft an diesem Informations-Anzeigegerät ist, dass sich die Information von dem Benutzer nicht einfach und intuitiv erfassen lässt.

Die EP 0 785 537 A1 beschreibt ein Routenplanungsmittel, bei dem eine Reiseroute berechnet wird. Dabei werden Dienstkategorien berücksichtigt, die von einem Benutzer eingegeben werden. Durch ein Iterationsverfahren sind Vorschlagsrouten optimierbar.

Aus der WO03/062749 A2 ist ein Verfahren zum Steuern einer Anzeigevorrichtung für ein mobiles Gerät bekannt. Auf der Anzeigevorrichtung des mobilen Geräts wird eine geografische Karte mit Elementen angezeigt, denen geografische Positionen zugeordnet sind, die auf der angezeigten Karte bei den ihnen zugeordneten geografischen Positionen angezeigt werden. Die Auswahl der angezeigten Elemente erfolgt auf Basis eines Stellenwerts, der in Abhängigkeit von dem Elementtyp, des Abstands des Elements von einer Route und dem Abstand von einer Position berechnet wird. Ferner werden bei dem Stellenwert spezifische Nutzerinformationen berücksichtigt, die u. a. die gegenwärtige Zeit und die Position des Nutzers umfassen. Dabei kann die Zeit mit Öffnungszeiten, welche den Elementen zugeordnet sind, verglichen werden und daraus bestimmt werden, welches Element dargestellt werden soll.

In der EP 0 673 010 A1 ist ein weiteres Navigationssystem für ein Fahrzeug beschrieben, in den ein Führer für Sehenswürdigkeiten integriert ist. Auch bei diesem System werden Elemente in Abhängigkeit von ihrer Priorität angezeigt.

Es ist die Aufgabe der vorliegenden Erfindung, ein Verfahren und eine Anzeigevorrichtung der eingangs genannten Art bereitzustellen, durch welche die Erfassbarkeit der auf der geografischen Karte dargestellten Elemente erleichtert wird und der Benutzer nicht durch die Steuerung des Verfahrens bzw. der Aufzeichnungsvorrichtung abgelenkt wird. Diese Aufgabe wird erfindungsgemäß durch ein Verfahren mit den Merkmalen des Anspruchs 1 und einer Anzeigevorrichtung mit den Merkmalen des Anspruchs 24 gelöst. Vorteilhafte Aus- und Weiterbildungen ergeben sich aus den Unteransprüchen.

Bei dem erfindungsgemäßen Verfahren wird für die auf der Karte darstellbaren Elemente die Relevanz für einen Nutzer des Kraftfahrzeugs mit Hilfe von Regeln bewertet. Dabei wird ermittelt, wie viele Elemente auf der gerade auf der Anzeigevorrichtung angezeigten geografischen Karte angezeigt werden können und es werden die darstellbare Anzahl an Elementen in der Reihenfolge ihrer Relevanz automatisch bei den ihnen zugeordneten geografischen Positionen angezeigt. Dabei sind zumindest einem in der Karte darstellbaren Element eine geografische Position und ein zeitlicher Parameter zugeordnet, wobei der zeitliche Parameter des Elements Öffnungszeiten und/oder Startzeiten betrifft, wobei die voraussichtliche Dauer berechnet wird, in welcher die geografische Position des Elements erreicht werden kann, dem der zeitliche Parameter zugeordnet ist, und wobei eine Regel zur bei der Bewertung der Relevanz dieses Elements umfasst, dass die voraussichtliche Ankunftszeit mit dem zeitlichen Parameter in Beziehung gesetzt wird, so dass dieses Element nur dann auf der Karte dargestellt wird, wenn die voraussichtliche Ankunftszeit innerhalb der Öffnungszeiten bzw. vor der Startzeit liegt, oder angezeigt wird, ob die voraussichtliche Ankunftszeit innerhalb der Öffnungszeiten bzw. vor der Startzeit liegt. Die Elemente sind beispielsweise Sonderziele (Points of Interest). Es ist für den Benutzer somit nicht erforderlich, je nach Situation die Kategorien der Elemente zu ändern, die auf der Karte angezeigt werden sollen. Die Relevanz wird unabhängig von der Kategoriezugehörigkeit hinsichtlich ihrer Relevanz bewertet und die Entscheidung, ob ein Element angezeigt werden soll, erfolgt in Abhängigkeit von dieser Bewertung. Auf diese Weise lässt sich, je nach Kartenmaßstab, die Anzahl der angezeigten Elemente so begrenzen, dass der Benutzer die Elemente schnell, einfach und intuitiv erfassen kann. Für den Benutzer ist schnell erfassbar, ob er eine dem Element zugeordnete Einrichtung zu deren Öffnungszeiten erreichen kann oder ob er ein dem Element zugeordnetes Ereignis rechtzeitig vor dem Beginn des Ereignisses erreichen kann. Das Element kann nur dann auf der Karte dargestellt werden, wenn die voraussichtliche Ankunftszeit innerhalb der Öffnungszeiten bzw. vor der Startzeit liegt. Liegt die voraussichtliche Ankunftszeit außerhalb der Öffnungszeiten bzw. nach der Startzeit, ist dieses Element für den Benutzer nämlich nur von geringer Relevanz. Gemäß dem erfindungsgemäßen Verfahren wird dieses Element in diesem Fall nicht dargestellt, wodurch die Zahl der dargestellten Elemente verringert wird bzw. ein anderes Element dargestellt werden kann, das für den Benutzer von höherer Relevanz ist.

Gemäß einer weiteren bevorzugten Ausgestaltung des erfindungsgemäßen Verfahrens hängt die Relevanz der darstellbaren Elemente und/oder die Art der Darstellung der dargestellten Elemente von Kontakten und/oder Terminen des Nutzers ab. Ein Element kann auf diese Weise insbesondere dann dargestellt werden, wenn mit ihm ein Termin oder ein Kontakt des Nutzers verknüpft ist. Hat der Nutzer beispielsweise zu einer bestimmten Zeit einen Termin in einem Restaurant, dann ist die Anzeige dieses Restaurants für den Nutzer von sehr großer Bedeutung. Die Relevanz dieses Elements ist somit aufgrund der Verknüpfung mit dem Termin sehr hoch.

Gemäß einer weiteren bevorzugten Ausgestaltung des erfindungsgemäßen Verfahrens werden bei der Bewertung der Elemente frühere Bewertungen der jeweiligen Elemente berücksichtigt. Diese Ausgestaltung ist insbesondere dann von Bedeutung, wenn Bewertungen von dem Benutzer beeinflusst werden können. Wurde beispielsweise einem Element, wie beispielsweise einem Restaurant, einmal von einem Benutzer eine hohe Bewertung gegeben, steigt bei zukünftigen Bewertungen dieses Elements dessen Relevanz. Damit kann erreicht werden, dass beispielsweise das Lieblingsrestaurant des Benutzers eher angezeigt wird als andere Restaurants.

Gemäß einer weiteren bevorzugten Ausgestaltung wird ein Nutzerprofil übertragen und dieses Nutzerprofil bei der Bewertung der Elemente berücksichtigt. Zum Nutzerprofil gehören alle Informationen, die der Benutzer über sich in das System eingegeben hat bzw. die das System über den Benutzer ermitteln konnte. Diese Informationen umfassen z.B. Interessen des Nutzers, die dem System z.B. durch Angaben von Kategorien (z.B. italienische Restaurants) und Meta-Interessen (z.B. familiengeeignete Elemente) mitgeteilt werden.

Ferner kann der Reisezweck anhand eines Terminkalenders ermittelt werden und der ermittelte Reisezweck bei der Bewertung der Elemente berücksichtigt werden. Ist der Reisezweck eine Fahrt zur Arbeit, sind andere Elemente für den Benutzer relevant als bei einer Urlaubsreise. Der Reisezweck könnte außerdem von dem Benutzer eingegeben werden, oder anhand des eingegebenen Ziels und der Tageszeit vom System selbst ermittelt werden.

Gemäß einer weiteren bevorzugten Ausgestaltung werden Wetterinformationen gewonnen und/oder übertragen und diese Wetterinformationen werden bei der Bewertung der Elemente berücksichtigt. Außerdem können Fahrzeugzustandsinformationen gewonnen werden und diese Fahrzeugzustandsinformationen bei der Bewertung der Elemente berücksichtigt werden. Zu den Fahrzeugzustandsinformationen gehören unter anderen der Tankinhalt, etwaige Defekte oder Wartungsintervalle. Liegen Defekte vor, ist die Anzeige von Werkstätten von hoher Relevanz. Neigt sich der Tankinhalt dem Ende, ist die Anzeige in der Nähe liegender Tankstellen von hoher Relevanz.

Ein weiterer Aspekt des erfindungsgemäßen Verfahrens betrifft die Art der Darstellung der Elemente in der geografischen Karte. Elemente mit höherer Relevanz werden vorzugsweise über eine räumliche Stafflung hervorgehoben graphisch dargestellt. Insbesondere werden Elemente mit höherer Relevanz räumlich näher dargestellt als Elemente niedrigerer Relevanz. Um die räumliche Stafflung zu erreichen, können die Elemente autostereoskopisch dargestellt werden. Dies bedeutet, dass die beiden Augen des Benutzers verschiedene Ansichten des Elements sehen. Beide Ansichten werden von dem Benutzer zu einer dreidimensionalen Ansicht des Elements zusammengesetzt. Auf diese Weise kann ein tatsächlicher räumlicher Eindruck des Elements, d.h. nicht nur eine perspektivische Darstellung des Elements, erreicht werden. Zusätzlich zur räumlichen Staffelung werden die Elemente vorzugsweise in verschiedenen halbtransparenten Ebenen dargestellt. Durch diese Art der Darstellung der Elemente wird die schnelle und intuitive Erfassbarkeit insbesondere der Elemente mit hoher Relevanz für den Benutzer vereinfacht.

Gemäß einer weiteren Ausgestaltung des erfindungsgemäßen Verfahrens werden die Elemente aus einem in dem Fahrzeug befindlichen Speicher ausgelesen. Gemäß einer anderen Ausgestaltung werden die Elemente über drahtlose Netze übertragen. In letzterem Fall können sie gegebenenfalls im Fahrzeug zwischengespeichert werden.

Ein weiterer Aspekt des erfindungsgemäßen Verfahrens betrifft eine Personalisierung des Verfahrens, welche die Kommunikation zwischen dem Benutzer und der Steuerung der Anzeige einfacher und intuitiver macht. Dabei können Nutzerinteressen und -missionen berücksichtigt werden.

Erfindungsgemäß erfolgt bei dieser Ausgestaltung des erfindungsgemäßen Verfahrens die Steuerung der Anzeigevorrichtung und eines mit diesem verbundenen Computersystems in Abhängigkeit von Einstellungen des Nutzers, wobei die Einstellungen die Stimmung des Nutzers wiedergeben. Die Stimmung des Nutzers wird bei der Bewertung der Relevanz der in der Karte darstellbaren Elemente berücksichtigt. Auf diese Weise können Nutzer gegenüber einem Personalisierungssystem, das mit der Steuerung der Anzeigevorrichtung verbunden ist, ihre momentane Stimmung und Interessenslage kommunizieren.

Gemäß einer weiteren Ausgestaltung werden eine Vielzahl von Funktionen des Computersystems gesteuert. Die Steuerung der Funktionen hängt von Parametern ab, wobei den Parametern Werte zugeordnet sind, die bestimmten Einstellungen der Stimmung des Nutzers zugeordnet sind, so dass eine Einstellung der Stimmung des Nutzers mehrere Parameterwerte festlegt.

Die Stimmung des Nutzers kann beispielsweise mit den Erwartungen des Nutzers an die Steuerung des Computersystems oder mit der Interessenlage des Nutzers hinsichtlich Ziel und/oder Zweck der Fahrt mit dem Kraftfahrzeug korrespondieren. Ferner können die Stimmungseinstellungen das Bedürfnis des Nutzers nach Information oder Unterhaltung, am Ziel anzukommen oder das Bedürfnis des Nutzers, das Computersystem zu kontrollieren, wiedergeben. Schließlich können die Stimmungseinstellungen wiedergeben, wie viel Information der Nutzer wünscht. Die Auswahl der dargestellten Elemente und/oder die Art der Darstellung der Elemente hängt bei dieser Ausgestaltung des Verfahren von den Stimmungseinstellungen ab.

Die erfindungsgemäße Anzeigevorrichtung umfasst die Merkmale des Anspruchs 24.

In dem Speicher ist für zumindest ein in der Karte darstellbares Element ein zeitlicher Parameter gespeichert. Das Steuergerät umfasst Mittel zum Berechnen der voraussichtlichen Dauer, in welcher die geografische Position dieses Elements erreicht werden kann und der Entscheidungsprozessor setzt bei der Bewertung der Relevanz des Elements die voraussichtliche Ankunftszeit mit dem zeitlichen Parameter in Beziehung. Ferner können vorzugsweise in dem Speicher Kontaktdaten und/oder Termindaten des Nutzers gespeichert sein, welche der Entscheidungsprozessor bei der Relevanz der darstellbaren Elemente berücksichtigt und/oder welche das Steuergerät bei der Art der Darstellung der Elemente berücksichtigt. Des Weiteren kann in dem Speicher vorzugsweise ein Nutzerprofil gespeichert sein. Schließlich kann eine Schnittstelle zu einem Fahrzeugbus vorgesehen sein, über die Fahrzeugzustandinformationen übertragbar sind.

Gemäß einer weiteren bevorzugten Ausgestaltung der erfindungsgemäßen Anzeigevorrichtung ist das Display zur autostereoskopischen Darstellung der Elemente ausgebildet. Beispielsweise kann vor einer herkömmlichen Flüssigkristallanzeige eine optische Struktur- oder Filtermaske angeordnet sein. Diese Maske bewirkt, dass die beiden Augen des Betrachters verschiedene Ansichten beispielsweise eines Elements sehen, die bei dem Benutzer zu einer dreidimensionalen Ansicht zusammengesetzt werden.

Gemäß einer weiteren bevorzugten Ausgestaltung der erfindungsgemäßen Anzeigevorrichtung ist eine Funkschnittstelle zur drahtlosen Übertragung der darstellbaren Elemente vorgesehen.

Gemäß einer weiteren erfindungsgemäßen Ausgestaltung der Anzeigevorrichtung sind manuelle Einstellregler zur Einstellung der Stimmung des Nutzers vorgesehen. In diesem Fall berücksichtigt der Entscheidungsprozessor die Stellung der Einstellregler für die Stimmung des Nutzers bei der Bewertung der Relevanz der in der Karte darstellbaren Elemente. Vorzugsweise ist mit zumindest je einem Einstellregler das Bedürfnis des Nutzers, am Ziel anzukommen, und das Bedürfnis des Nutzers, die Anzeigevorrichtung zu kontrollieren, einstellbar sowie einstellbar, wie viel Information der Nutzer wünscht.

Die Erfindung wird nun anhand von Ausführungsbeispielen mit Bezug zu den Zeichnungen erläutert.
Fig. 1 zeigt schematisch den allgemeinen Aufbau eines Ausführungsbeispiels der erfindungsgemäßen Anzeigevorrichtung,
Fig. 2 zeigt den Aufbau eines Ausführungsbeispiels der Anzeigevorrichtung mit weiteren Details,
Fig. 3 zeigt die Anzeige eines Displays eines Ausführungsbeispiels der erfindungsgemäßen Anzeigevorrichtung und
Fig. 4 zeigt die Einstellregler zur Eingabe de Stimmungen des Nutzers.

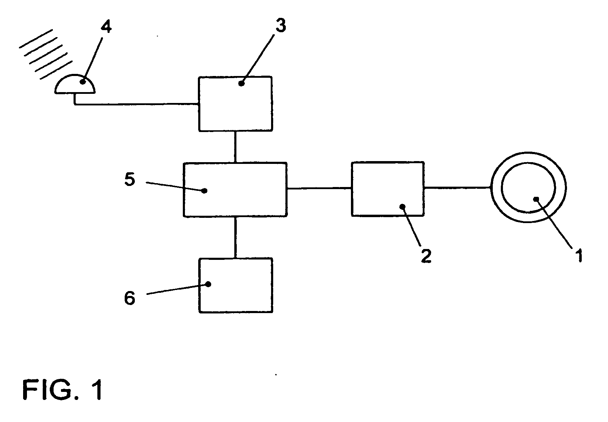

Mit Bezug zu Fig. 1 wird zunächst der allgemeine Aufbau der Anzeigevorrichtung beschrieben.

Die Anzeigevorrichtung umfasst ein Display 1, das mit einem Steuergerät 2 verbunden ist. Im vorliegenden Fall ist das Display 1 scheibenförmig. Andere Formen, wie beispielsweise ein quadratisches, rechteckiges oder ellipsenförmiges Display, sind selbstverständlich auch denkbar.

Das Steuergerät 2 ist mit einem Entscheidungsprozessor 5 verbunden, welcher wiederum einerseits mit einem Navigationssystem 3 und andererseits mit einem Speicher 6 verbunden ist. Das Navigationssystem 3 umfasst einen Speicher zum Speichern von Daten zur Darstellung einer geografischen Karte oder ist mit einem solchen Speicher verbunden. Diese Daten werden von dem Navigationssystem 3 über den Entscheidungsprozessor 5 an das Steuergerät 2 übertragen, welches die Daten an das Display 1 zur Anzeige eines Ausschnitts einer digitalen geografischen Karte weiterleitet. Das Navigationssystem 3 ist ferner mit einem Empfänger 4 für Satellitensignale, wie z.B. einem Global-Positioning-System (GPS)-Empfänger verbunden. Gleichermaßen könnten auch andere Satellitennavigationssysteme, einschließlich dem zukünftigen System Galileo, verwendet werden. Ferner ist es selbstverständlich auch möglich, dass das Display 1, das Steuergerät 2 und das Navigationssystem 3 in einem einzigen Gerät integriert sind. Dieses könnte ferner auch den Entscheidungsprozessor 5 enthalten.

In dem Speicher 6 sind Elemente gespeichert, welche ergänzend auf dem Display 1 zusammen mit dem Ausschnitt der geografischen Karte dargestellt werden sollen. Den Elementen sind geografische Positionen zugeordnet. Die Daten zur Darstellung dieser Elemente werden von dem Speicher 6 über den Entscheidungsprozessor 5 an das Steuergerät 2 übertragen, welche die Daten so aufbereitet, dass die Elemente bei den ihnen zugeordneten geografischen Positionen auf dem Ausschnitt der angezeigten geografischen Karte angezeigt werden. Der Speicher 6 könnte auch in dem Navigationssystem 3 integriert sein.

Der Entscheidungsprozessor 5 bewertet die Relevanz der auf der geografischen Karte darstellbaren Elemente. In Abhängigkeit von dem Ergebnis dieser Bewertung entscheidet der Entscheidungsprozessor 5 automatisch, welche Elemente zur Anzeige auf dem Display 1 an das Steuergerät 2 übertragen werden. Der Aufbau und die Funktion des Entscheidungsprozessors 5 wird im Folgenden detaillierter erläutert.

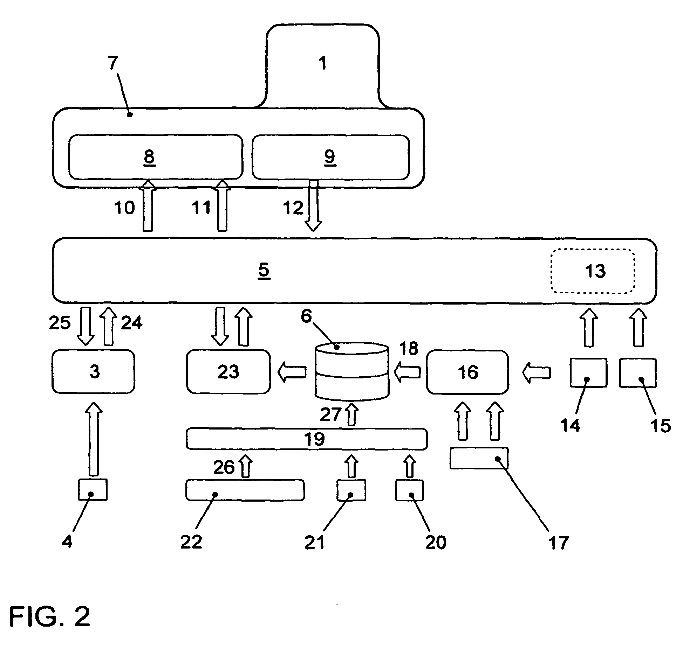

Fig. 2 zeigt die prinzipielle Architektur eines Navigationssystems für ein Kraftfahrzeug, in dem die Anzeigevorrichtung integriert ist. Das System weist eine Benutzerschnittstelle 7 (Human Machine Interface, HMI) auf. Sie dient einerseits zur Ausgabe der geografischen Navigationskarte und ermöglicht andererseits dem Benutzer die Interaktion mit dem System. Hierfür weist die Benutzerschnittstelle 7 einen Renderer 8 auf, der für die Darstellung der geografischen Navigationskarte mit den Elementen zuständig ist, die entsprechend bei den ihnen zugeordneten geografischen Positionen angezeigt werden.

Zur Wiedergabe der Darstellung umfasst die Benutzerschnittstelle 7 das Display 1. Das Display 1 kann eine herkömmliche Flüssigkristallanzeige für zweidimensionale Bilder oder eine andere entsprechende für die Verwendung in einem Kraftfahrzeug geeignete Anzeigeeinrichtung sein. Des Weiteren kann das Display 1 jedoch auch zur autostereoskopen dreidimensionalen Darstellung von Bildern ausgebildet sein. Um die autostereoskopische Wirkung zu erzielen, kann z.B. vor einer herkömmlichen Flüssigkristallanzeige eine Maske angeordnet sein, welche die Lichtemission des von der Flüssigkristallanzeige abgestrahlten Lichts so verändert, dass autostereoskopische Bilder darstellbar sind. Bei der Maske handelt es sich beispielsweise um eine wellenlängenselektive Filtermaske bzw. eine optische Strukturmaske. Die Maske ermöglicht es, dass man zwischen Teilbildern, die zu verschiedenen Ansichten gehören, unterscheiden kann und jede Ansicht in eine andere Richtung abgestrahlt wird. Es können somit Teilbilder für das rechte und für das linke Auge getrennt werden. Beim Betrachten des Displays 1 können die Teilbilder zu einer dreidimensionalen Ansicht zusammengesetzt werden. Hierfür sind keine weiteren Hilfsmittel, wie Brillen oder dgl.. erforderlich. Hinsichtlich weiterer Details des autostereoskopischen Displays 1 wird auf die DE 103 09 194 A1 und die DE 103 20 530 A1 verwiesen.

Ferner weist die Benutzerschnittstelle 7 einen Konfigurator 9 auf, über den der Benutzer das System seinen Wünschen entsprechend einstellen kann. Die Benutzerschnittstelle 7 umfasst somit insgesamt auch das in Fig. 1 allgemein gezeigte Steuergerät 2. Die Benutzerschnittstelle 7 kann außerdem Einstelltregler für die Stimmung des Nutzers enthalten, wie es später erläutert wird.

Der Entscheidungsprozessor 5 ist das zentrale Modul im Navigationssystem, das die Informationen von allen Komponenten entgegennimmt und festlegt, welche Elemente auf dem Display 1 angezeigt werden. Hierfür überträgt der Entscheidungsprozessor 5 über die Verbindung 10 Strecken- und Positionsdaten an den Renderer 8 der Benutzerschnittstelle 7. Diese Strecken- und Positionsdaten erhält der Entscheidungsprozessor 5 über die Verbindung 24 von der Navigationseinheit 3. Für die Navigation ist die Navigationseinheit 3 mit einem GPS-Empfänger 4 verbunden.

Der Benutzer kann über den Konfigurator 9 der Benutzerschnittstelle 7 Einstellungen an dem Navigationssystem vornehmen. Diese Einstellungen werden über die Verbindung 12 von dem Konfigurator 9 an den Entscheidungsprozessor 5 übertragen. Beispielsweise kann der Benutzer über den Konfigurator 9 ein Ziel für die Navigation eingeben. Dieses Ziel wird dann von dem Konfigurator 9 über die Verbindung 12 an den Entscheidungsprozessor 5 übertragen, welcher die Zieldaten über die Verbindung 25 an die Navigationseinheit 3 überträgt. Die Navigationseinheit 3 berechnet hieraus eine Route und überträgt die Daten für die jeweils anzuzeigende geografische Karte über die Verbindung 24 an den Entscheidungsprozessor 5, welcher sie an die Benutzerschnittstelle 7 weiterleitet.

Der Entscheidungsprozessor 5 ist ferner über eine Vorauswahleinrichtung 23 mit einem als Datenbank ausgestalteten Speicher 6 für die in Verbindung mit der geografischen Karte darstellbaren Elemente verbunden. Im vorliegenden Ausführungsbeispiel handelt es sich bei den Elementen um sog. Sonderziele oder Points of Interest. In der Datenbank liegen zumindest Informationen zu der geografischen Position eines Sonderziels vor. Ferner können folgende weitere Informationen zu dem Sonderziel in der Datenbank enthalten sein:

Zunächst besitzt jedes Sonderziel üblicherweise einen Namen und ein Icon für die Darstellung in der geografischen Karte. Die geografische Position des Sonderziels ist so gespeichert, dass die Daten von dem Renderer 8 zur Darstellung in Verbindung mit digitalen Straßenkarten verarbeitet werden können. Ein Sonderziel kann auch beweglich sein. Dies ist z.B. dann der Fall, wenn das Sonderziel einer Person zugeordnet ist, die sich beispielsweise in einem Fahrzeug bewegt. Des Weiteren ist das Sonderziel einer oder mehreren Kategorien zugeordnet. Ist das Sonderziel einer Tankstelle zugeordnet, wird dieses Sonderziel der Kategorie TANKSTELLE zugeordnet. Ist der Tankstelle ein Shop angeschlossen, kann man die Tankstelle zusätzlich in die Kategorie KIOSK einordnen und üblicherweise auch in die Kategorie TOILETTEN.

Neben den Kategorien kann man einem Sonderziel beispielsweise auch eine Reihe von Stichworten (sog. Metainformationen) zuordnen, um es näher zu bestimmen. So lässt sich beispielsweise festlegen, dass ein bestimmtes Museum eher für Kinder oder Familien geeignet ist.

Des Weiteren kann ein Sonderziel auf verschiedene Art und Weise eine zeitliche Relevanz besitzen. Aus diesem Grund kann einem Sonderziel ein zeitlicher Parameter zugeordnet sein. Dies können beispielsweise die Öffnungszeiten der dem Sonderziel zugeordneten Einrichtung oder die Startzeiten eines dem Sonderziel zugeordneten Ereignisses sein. Ist das Sonderziel beispielsweise ein Fußballstadion, kann diesem Sonderziel die Anfangszeit eines Fußballspiels zugeordnet sein. Ist dem Sonderziel ein Supermarkt zugeordnet, können die Öffnungszeiten dieses Supermarkts gespeichert sein. Des Weiteren kann es sich bei dem Sonderziel um einen Ort handeln, bei dem der Benutzer einen Termin hat. Der Terminbeginn kann dann zusammen mit diesem Sonderziel in der Datenbank 6 gespeichert sein.

Schließlich können in der Datenbank Bewertungsinformationen zu Sonderzielen gespeichert sein. Beispielsweise können die Ergebnisse früherer Bewertungen dieses Sonderziels gespeichert sein. Ferner können Bewertungen des Sonderziels durch den Benutzer oder durch andere Benutzer gespeichert sein.

Die Sonderziele können in der Datenbank statisch oder dynamisch verwaltet werden. Statische Sonderziele sind dauerhaft im System vorhanden. Sie können z.B. über einen Navigationsdatenträger in das System gelangen. Dynamische Sonderziele gelangen während des Betriebs, z.B. durch eine drahtlose Verbindung in die Datenbank. Hierfür kann ein lokaler Sonderzielserver 22 vorgesehen sein, der über eine W-LAN-Verbindung 26 mit einer externen Datenerfassung 19 kommuniziert. Die externe Datenerfassung 19 kann außerdem mit einem Mobilfunknetz 21 und einem Rundfunknetz 20 gekoppelt sein. Die externe Datenerfassung 19 erlaubt das Hinzufügen von Sonderzielen aus externen Quellen in die Datenbank des Speichers 6 über die Verbindung 27.

Des Weiteren ist ein Generator 16 für persönliche Sonderziele vorgesehen. Der Generator 16 kann aus dem Profil des Nutzers, dessen Terminen und Kontakten Sonderziele erzeugen und über die Verbindung 18 an den Speicher 6 übertragen. Die Termine und Kontakte des Nutzers erhält der Generator 16 aus dem Organizer 17 des Nutzers. Über die Einheit 14 kann außerdem ein Nutzerprofil sowohl an den Generator 16 zum Erzeugen der persönlichen Sonderziele übertragen werden als auch an den Entscheidungsprozessor 5. Ferner können über die Einheit 15, z.B. dem Fahrzeugbus, Fahrzeugzustandsdaten an den Entscheidungsprozessor 5 übertragen werden.

Im Folgenden wird erläutert, wie der Entscheidungsprozessor 5 die Sonderziele auswählt, welche bei den ihnen zugeordneten geografischen Positionen auf der von der Navigationseinheit 3 erzeugten geografischen Karte angezeigt werden sollen:

Der Entscheidungsprozessor 5 bewertet die Relevanz der auf der Karte darstellbaren Sonderziele. Diese Bewertung erfolgt in Abhängigkeit von der Umgebungssituation des Fahrzeugs, persönlichen Bedürfnissen des Nutzers sowie Daten zum Zustand des Fahrzeugs. Es wird daher zunächst erläutert, wie diese Daten, auf deren Basis die Bewertung vorgenommen wird, gewonnen werden.

Das Profil des Nutzers, welches über die Einheit 14 einerseits die Auswahl persönlicher Sonderziele beeinflusst und andererseits direkt die Bewertung durch den Entscheidungsprozessor beeinflusst, enthält alle Informationen, die der Nutzer über sich in das System eingegeben hat bzw. die das System über den Nutzer ermitteln konnte. Dies sind z.B. Interessen des Nutzers, der Reisezweck oder der Wohnort des Nutzers.

Die Umgebungsinformationen betreffen alle Informationen, die über die derzeitige Umgebung zu beschaffen sind, z.B. das derzeitige Datum, insbesondere der Wochentag, die Tageszeit und das Wetter. Diese Daten können entweder von der Navigationseinheit 3 an den Entscheidungsprozessor 5 übertragen werden. Ferner können sie über die externe Datenerfassung 19 erfasst werden und über die Vorauswahl 23 der Sonderziele zum Entscheidungsprozessor 5 gelangen.

Über den Fahrzeugbus bzw. die Einheit 15 können Daten über den derzeitigen Zustand des Fahrzeugs an den Entscheidungsprozessor 5 übertragen werden. Diese Fahrzeugzustandsdaten betreffen insbesondere Informationen über den Tankinhalt, über Fehlermeldungen der Steuergeräte des Fahrzeugs und Wartungsintervalle.

Schließlich beeinflusst der Zustand der Navigationseinheit 3 die Bewertung durch den Entscheidungsprozessor 5. Der Zustand umfasst Informationen, wie der Zoom der Navigationseinheit eingestellt ist, d.h. wie groß der auf dem Display 1 derzeit angezeigte Kartenausschnitt ist, ob ein Ziel bekannt ist und wie weit dieses entfernt ist sowie die derzeit gefahrene Geschwindigkeit. Ferner gehören hierzu Informationen über die Art bzw. den Typ der gerade befahrenen Straße.

Anhand der vorstehend genannten Informationen führt der Entscheidungsprozessor 5 eine Bewertung der darstellbaren Sonderziele mit Hilfe von Regeln aus einer Regelbasis 13 durch. Das Ergebnis dieser Bewertung ist eine Liste mit nach ihrer Wichtigkeit geordneten Sonderzielen. Dabei kann z.B. jedem Sonderziel eine Punktbewertung zugeordnet sein. Es gibt viele Möglichkeiten, um die Sonderziele anhand der Regeln auszuwerten. Dabei lassen sich die Regeln sehr flexibel gestalten und an die Bedürfnisse des Nutzers anpassen. Zu unterscheiden sind dabei Regeln, die sich jeweils auf ein Sonderziel beziehen und Regeln, die sich auf mehrere Sonderziele beziehen. Im Folgenden werden beispielhaft einige Regeln beschrieben, die sich auf ein Sonderziel beziehen:
- Tankinhalt: Wenn wenig Kraftstoff im Tank des Kraftfahrzeugs ist, werden Sonderziele die Tankstellen betreffen, höher bewertet. Es kann hier beispielsweise ein bestimmter Grenzwert für den Tankinhalt gespeichert sein, bei dessen Unterschreiten die höhere Bewertung der Sonderziele für Tankstellen erfolgt.
- Nutzerkategorien: Liegt ein Sonderziel in einer vom Nutzer gewählten Kategorie, so wird dieses Sonderziel höher bewertet.
- Fahrtrichtung: Liegt ein Sonderziel in Fahrtrichtung bzw. auf einer von der Navigationseinheit 3 berechneten Route, so wird es höher bewertet. Dies kann gleichzeitig abhängig von der Kategorie des Sonderziels sein.
- Maximale Entfernung: Abhängig von der Kategorie werden Sonderziele nur bis zu einer maximalen Entfernung angezeigt.
- Verkehrsbehinderung: Handelt es sich bei einem Sonderziel um eine Verkehrsbehinderung, wie beispielsweise einem Stau, so wird diese sehr hoch bewertet.
- Entfernungsabhängigkeit: Generell kann ein Sonderziele um so höher bewertet werden, je näher es sich am Nutzer befindet.
- Bewertungsverlauf: Bei der Bewertung der Sonderziele werden frühere Bewertungen dieses Sonderziels miteinbezogen. Dies soll verhindern, dass ein Sonderziel kurz nach seiner Darstellung auf der Karte wieder ausgeblendet wird.

Im Folgenden werden zwei Beispiele für Regeln, die sich auf mehrere Sonderziele beziehen, geschildert:
- Anzahl abhängig von der Kategorie: Bei bestimmten Kategorien wird nur eine begrenzte Anzahl zu dieser Kategorie gehörender Sonderziele auf der geografischen Karte angezeigt. Beispielsweise kann die maximale Anzahl gleichzeitig angezeigter Geldautomaten auf drei begrenzt werden, da eine Darstellung von mehr Geldautomaten für den Nutzer nicht sinnvoll wäre.
- Maximale Anzahl aller dargestellten Sonderziele: Die Anzahl der maximal dargestellten Sonderziele wird begrenzt, um die Anzeige nicht zu überfrachten.

Die vorstehend beschriebenen Regeln können selbstverständlich noch sehr viel komplexer ausgestaltet werden. Das Szenario mit der Tankinhalt-Regel lässt sich beispielsweise folgendermaßen ausbauen: Wenn wenig Benzin im Tank ist, werden Tankstellen angezeigt, und zwar nach Möglichkeit Tankstellen der vom Nutzer bevorzugten Marke. Je weniger Benzin vorhanden ist, desto eher werden auch Tankstellen anderer Marken mit angezeigt. Es wird allerdings nur eine sinnvolle Anzahl an Tankstellen angezeigt, da der Nutzer letztendlich nur bei einer Tankstelle tanken wird. Die angezeigten Tankstellen sollen entlang der geplanten Route liegen, es sei denn eine der folgenden Ausnahmen tritt ein: es ist so wenig Benzin im Tank, dass der Fahrer größere Umwege in Kauf nehmen oder sogar zurückfahren sollte; man ist gerade am Beginn oder kurz vor Ende der geplanten Route; ein kurzes Stück zurückfahren würde weniger Zeit kosten als der Umweg beim Folgen der Route. Des Weiteren könnte der Entscheidungsprozessor 5 bei der Auswahl der Tankstellen auch die jeweiligen Benzinpreise berücksichtigen. Die Daten hierzu könnte der Entscheidungsprozessor 5 über die externe Datenerfassungseinheit 19 erhalten.

Des Weiteren werden von dem Entscheidungsprozessor zeitliche Parameter, die den Sonderzielen zugeordnet sind, eine große Rolle spielen. Wenn beispielsweise ein Sonderziel aufgrund der Berechnungen der Navigationseinheit 3 nur außerhalb einer Öffnungszeit oder nach einer Startzeit erreicht werden kann, erhält dieses Sonderziel eine niedrige Bewertung. Ist einem Sonderziel ein Termin des Nutzers zugeordnet, enthält dieses Sonderziel eine sehr hohe Bewertung.

Nachdem der Entscheidungsprozessor 5 die Relevanz der Sonderziele bewertet hat und ermittelt wurde, wie viele Sonderziele auf der gerade auf dem Display 1 angezeigten geografischen Karte angezeigt werden können, wird die darstellbare Anzahl an Sonderzielen in der Reihenfolge ihrer Relevanz über die Verbindung 11 an den Renderer 8 übertragen. Hierbei werden auch die geografischen Positionen der darzustellenden Sonderziele übertragen. Der Renderer 8 ergänzt die Sonderziele nun bei den geografischen Positionen auf der Karte, die von der Navigationseinheit 3 geliefert wurde, so dass die Sonderziele bei den ihnen zugeordneten geografischen Positionen auf dem Display 1 angezeigt werden.

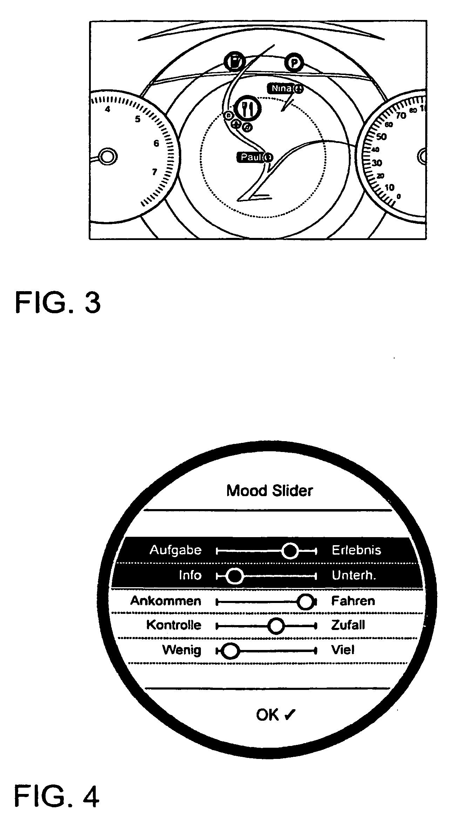

Fig. 3 zeigt ein Beispiel für eine solche Anzeige. Es wird die derzeitige Position des Fahrzeugs, ein Restaurant und eine Tankstelle auf der Route sowie ein Parkplatz und die Adresse eines Kontaktes des Nutzers in der Nähe der Route angezeigt. Ist das Display 1 für eine autostereoskopische Anzeige geeignet, könnte beispielsweise bei fast leerem Tank die Tankstelle in einer hervorgehobenen Ebene angezeigt werden, um diese hervorzuheben. Hierdurch kann eine intuitive Wahrnehmung der hohen Relevanz dieses Sonderziels über eine räumliche Staffelung erreicht werden. Allgemein können alle Sonderziele in Abhängigkeit von der Bewertung durch den Entscheidungsprozessor 5 über ihre dreidimensionale Darstellung relevanzcodiert werden. Dabei erscheinen Sonderziele mit hoher Relevanz dem Nutzer räumlich näher. Falls sich die Relevanz eines Sonderziels während der Anzeigephase verändert, so wird die räumliche Nähe in Form eine dezenten Animation entsprechend angepasst. Dabei sollten allerdings Bildsprünge vermieden werden, um den Fahrer nicht abzulenken.

Ist das Display 1 nicht für eine autostereoskope Darstellung der Sonderziele geeignet, kann der Effekt auch als Bild oder Graphik zweidimensional simuliert und auf einem normalen zweidimensionalen Display 1 angezeigt werden. Ferner sind auch andere Displaylösungen mit räumlicher Staffelung denkbar, wie z.B. durch überlagernde halbtransparente Displays oder Projektionen auf hintereinander liegende Reflektionsflächen.

In Fig. 4 ist eine Einheit gezeigt, durch welche der Nutzer seine momentane Stimmung auf abstrahierte Weise eingeben kann. Diese Einheit ist Teil des Konfigurators 9 der Benutzerschnittstelle 7. Die Einstellungen der verschiedenen Einstellregler dieser Einheit haben Einfluss auf die Bewertung der Sonderziele durch den Entscheidungsprozessor 5. Die in Fig. 4 gezeigte Einheit ist somit eine intuitive Interfacelösung zur einfachen Kommunikation von Nutzerinteressen und -missionen gegenüber der Anzeigevorrichtung als Teil eines Personalisierungssystems. Die einzelnen Einstellregler können zwischen zwei extremen Interessenzielen so eingestellt werden, wie es der aktuellen Situation und Stimmung des Nutzers entspricht. Die Einstellregler können sowohl als virtuelle Schieberegler auf dem Display 1 oder einem anderen Display als auch als körperliche Einstellregler umgesetzt werden. Die aktuellen Einstellungen der Einstellregler können an den Entscheidungsprozessor 5 über einen Betätigungsknopf oder automatisch übermittelt werden. Aus den zahlreichen Einstellkombinationen der Einstellregler ergibt sich bei treffender Auswahl der Kriterien ein differenziertes Bild des momentanen Nutzerzustands aus Nutzersicht. Die in Fig. 4 gezeigten Einstellungen der Einstellregler gibt Aufschluss über die Art der Fahrt, die Stimmung des Nutzers und die gewünschte Informationsfülle. Das Prinzip dieser Einstellregler zur Einstellung der Stimmung des Nutzers ließe sich im Prinzip jedoch auch auf andere Nutzungskontexte, wie z.B. die Musikauswahl, Tourismus oder Nachrichten übertragen. Sie werden als Ergänzungen der erfassten Umgebungsdaten oder statischen Nutzerdaten verwendet.

Die Einstellregler geben im Einzelnen wieder, inwieweit der Nutzer eine bestimmte Aufgabe erfüllen will oder inwieweit er freier in seiner Fahrtgestaltung sein will. Der Nutzer kann einstellen, inwieweit er an Information einerseits oder Unterhaltung andererseits, am Ankommen am Ziel oder am Fahren selbst interessiert ist. Er kann angeben, inwieweit er Kontrolle über das System ausüben will oder die Kontrolle dem System überlassen will, sowie allgemein wie viel oder wie wenig Information er bekommen möchte. Die Einstellung der Einstellregler korrespondiert somit mit der Interessenslage des Nutzers hinsichtlich Ziel und/oder Zweck der Fahrt.

### BEZUGSZEICHENLISTE

- 1: Display
- 2: Steuergerät
- 3: Navigationssystem
- 4: Empfänger für Satellitensignale
- 5: Entscheidungsprozessor
- 6: Speicher
- 7: Benutzerschnittstelle
- 8: Renderer
- 9: Konfigurator
- 10: Verbindung
- 11: Verbindung
- 12: Verbindung
- 13: Regelbasis
- 14: Einheit für Nutzerprofil
- 15: Fahrzeugbus
- 16: Generator für persönliche Sonderziele
- 17: Organizer
- 18: Verbindung
- 19: externe Datenerfassung
- 20: Rundfunknetz
- 21: Mobilfunknetz
- 22: Sonderzielserver
- 23: Vorauswahl
- 24: Verbindung
- 25: Verbindung
- 26: W-LAN-Verbindung
- 27: Verbindung

## Patentansprüche

1. Verfahren zum Steuern einer Anzeigevorrichtung in einem Kraftfahrzeug, bei dem
- die Anzeigevorrichtung eine geografische Karte mit Elementen anzeigt, denen geografische Positionen zugeordnet sind und die auf der angezeigten Karte bei den ihnen zugeordneten geografischen Positionen angezeigt werden,
- für die auf der Karte darstellbaren Elemente die Relevanz für den Nutzer des Kraftfahrzeugs mit Hilfe von Regeln bewertet wird,
- ermittelt wird, wie viele Elemente auf der gerade auf der Anzeigevorrichtung angezeigten geografischen Karte angezeigt werden können,
- die darstellbare Anzahl an Elementen in der Reihenfolge ihrer Relevanz automatisch bei den ihnen zugeordneten geografischen Positionen angezeigt werden,
- wobei zumindest einem in der Karte darstellbaren Element eine geografische Position und ein zeitlicher Parameter zugeordnet sind, wobei der zeitliche Parameter des Elements Öffnungszeiten und/oder Startzeiten betrifft,
- wobei die voraussichtliche Dauer berechnet wird, in welcher die geografische Position des Elements erreicht werden kann, dem der zeitliche Parameter zugeordnet ist, und
- wobei eine Regel zur Bewertung der Relevanz dieses Elements umfasst, dass die voraussichtliche Ankunftszeit mit dem zeitlichen Parameter in Beziehung gesetzt wird, so dass dieses Element nur dann auf der Karte dargestellt wird, wenn die voraussichtliche Ankunftszeit innerhalb der Öffnungszeiten bzw. vor der Startzeit liegt, oder angezeigt wird, ob die voraussichtliche Ankunftszeit innerhalb der Öffnungszeiten bzw. vor der Startzeit liegt.

2. Verfahren nach Anspruch 1,
**dadurch gekennzeichnet,**
**dass** bei einer weiteren Regel die Relevanz der darstellbaren Elemente und/oder die Art der Darstellung der dargestellten Elemente von Kontakten und/oder Terminen des Nutzers abhängt.

3. Verfahren nach einem der vorstehenden Ansprüche,
**dadurch gekennzeichnet,**
**dass** bei der Bewertung der Elemente frühere Bewertungen der jeweiligen Elemente berücksichtigt werden.

4. Verfahren nach einem der vorstehenden Ansprüche,
**dadurch gekennzeichnet,**
**dass** ein Nutzerprofil übertragen wird und dieses Nutzerprofil bei einer weiteren Regel bei der Bewertung der Elemente berücksichtigt wird.

5. Verfahren nach einem der vorstehenden Ansprüche,
**dadurch gekennzeichnet,**
**dass** der Reisezweck anhand eines Terminkalenders ermittelt wird und der ermittelte Reisezweck bei einer weiteren Regel bei der Bewertung der Elemente berücksichtigt wird.

6. Verfahren nach einem der vorstehenden Ansprüche,
**dadurch gekennzeichnet,**
**dass** Wetterinformationen gewonnen und/oder übertragen werden und diese Wetterinformationen bei einer weiteren Regel bei der Bewertung der Elemente berücksichtigt werden.

7. Verfahren nach einem der vorstehenden Ansprüche,
**dadurch gekennzeichnet,**
**dass** Fahrzeugzustandsinformationen gewonnen werden und diese Fahrzeugzustandsinformationen bei einer weiteren Regel bei der Bewertung der Elemente berücksichtigt werden.

8. Verfahren nach einem der vorstehenden Ansprüche,
**dadurch gekennzeichnet,**
**dass** Elemente mit höherer Relevanz über eine räumliche Staffelung hervorgehoben graphisch dargestellt werden.

9. Verfahren nach einem der vorstehenden Ansprüche,
**dadurch gekennzeichnet,**
**dass** Elemente mit höherer Relevanz räumlich näher dargestellt werden als Elemente niedrigerer Relevanz.

10. Verfahren nach Anspruch 8 oder 9,
**dadurch gekennzeichnet,**
**dass** zur räumlichen Staffelung die Elemente autostereoskopisch dargestellt werden.

11. Verfahren nach einem der Ansprüche 8 bis 10,
**dadurch gekennzeichnet,**
**dass** zur räumlichen Staffelung Elemente in verschiedenen halbtransparenten Ebenen dargestellt werden.

12. Verfahren nach einem der vorstehenden Ansprüche,
**dadurch gekennzeichnet,**
**dass** die Elemente aus einem in dem Fahrzeug befindlichen Speicher ausgelesen werden.

13. Verfahren nach einem der vorstehenden Ansprüche,
**dadurch gekennzeichnet,**
**dass** die Elemente über drahtlose Netze übertragen werden.

14. Verfahren nach einem der vorstehenden Ansprüche,
**dadurch gekennzeichnet,**
**dass** die Steuerung der Anzeigevorrichtung und eines mit dieser verbundenen Computersystems in Abhängigkeit von Einstellungen des Nutzers erfolgt und dass die Einstellungen die Stimmung des Nutzers wiedergeben.

15. Verfahren nach Anspruch 14,
**dadurch gekennzeichnet,**
**dass** die Stimmung des Nutzers bei der Bewertung der Relevanz der in der Karte darstellbaren Elemente berücksichtigt wird.

16. Verfahren nach Anspruch 14 oder 15,
**dadurch gekennzeichnet,**
**dass** eine Vielzahl von Funktionen des Computersystems gesteuert werden, dass die Steuerung der Funktionen von Parametern abhängt und dass den Parametern Werte zugeordnet sind, die bestimmten Einstellungen der Stimmung des Nutzers zugeordnet sind, so dass eine Einstellung der Stimmung des Nutzers mehrere Parameterwerte festlegt.

17. Verfahren nach einem der Ansprüche 14 bis 16,
**dadurch gekennzeichnet,**
**dass** die Stimmung des Nutzers mit den Erwartungen des Nutzers an die Steuerung des Computersystems korrespondiert.

18. Verfahren nach einem der Ansprüche 14 bis 17,
**dadurch gekennzeichnet,**
**dass** die Stimmung des Nutzers mit der Interessenslage des Nutzers hinsichtlich Ziel und/oder Zweck der Fahrt mit dem Kraftfahrzeug korrespondiert.

19. Verfahren nach einem der Ansprüche 14 bis 18,
**dadurch gekennzeichnet,**
**dass** die Stimmungseinstellungen das Bedürfnis des Nutzers nach Information oder Unterhaltung wiedergeben.

20. Verfahren nach einem der Ansprüche 14 bis 19,
**dadurch gekennzeichnet,**
**dass** die Stimmungseinstellungen das Bedürfnis des Nutzers, am Ziel anzukommen, wiedergeben.

21. Verfahren nach einem der Ansprüche 14 bis 20,
**dadurch gekennzeichnet,**
**dass** die Stimmungseinstellungen das Bedürfnis des Nutzers, das Computersystem zu kontrollieren, wiedergeben.

22. Verfahren nach einem der Ansprüche 14 bis 21,
**dadurch gekennzeichnet,**
**dass** die Stimmungseinstellungen wiedergeben, wie viel Information der Nutzer wünscht.

23. Verfahren nach einem der Ansprüche 14 bis 22,
**dadurch gekennzeichnet,**
**dass** die Auswahl der dargestellten Elemente und/oder die Art der Darstellung der Elemente von den Stimmungseinstellungen abhängt.

24. Anzeigevorrichtung in einem Kraftfahrzeug mit
- einem Steuergerät (2),
- einem mit dem Steuergerät (2) verbundenen Display (1),
- einem oder mehreren Speichern (6) zum Speichern von Daten zur Darstellung einer geografischen Karte und zum Speichern von Elementen, denen geografische Positionen zugeordnet sind und die auf der angezeigten Karte bei den ihnen zugeordneten geografischen Positionen darstellbar sind,
- mit dem Steuergerät (2) gekoppelte Mittel (3) zum Berechnen der voraussichtlichen Dauer, in welcher die geografische Position dieses Elements erreicht werden kann,
- einem mit dem Steuergerät (2) verbundenen Entscheidungsprozessor (5), mit dem die Relevanz der auf der Karte darstellbaren Elemente mit Hilfe von Regeln bewertbar ist und in Abhängigkeit von dem Ergebnis der Bewertung automatisch entscheidbar ist, wie viele und welche Elemente auf der gerade auf dem Display (1) angezeigten geographischen Karte in der Reihenfolge ihrer Relevanz bei den ihnen zugeordneten geografischen Positionen angezeigt werden können, wobei in dem Speicher (6) für zumindest ein in der Karte darstellbares Element ein zeitlicher Parameter gespeichert ist, wobei der zeitliche Parameter des Elements Öffnungszeiten und/oder Startzeiten betrifft, wobei eine Regel zur Bewertung der Relevanz des Elements die voraussichtliche Ankunftszeit mit dem zeitlichen Parameter in Beziehung setzt, so dass dieses Element nur dann auf der Karte dargestellt wird, wenn die voraussichtliche Ankunftszeit innerhalb der Öffnungszeiten bzw. vor der Startzeit liegt oder angezeigt wird, ob die voraussichtliche Ankunftszeit innerhalb der Öffnungszeiten bzw. vor der Startzeit liegt.

25. Anzeigevorrichtung nach Anspruch 24,
**dadurch gekennzeichnet,**
**dass** in dem Speicher (6) Kontaktdaten und/oder Termindaten des Nutzers gespeichert sind, welche der Entscheidungsprozessor (5) bei der Relevanz der darstellbaren Elemente berücksichtigt und/oder welche das Steuergerät (2) bei der Art der Darstellung der Elemente berücksichtigt.

26. Anzeigevorrichtung nach Anspruch 24 oder 25,
**dadurch gekennzeichnet,**
**dass** in dem Speicher (6) ein Nutzerprofil gespeichert ist.

27. Anzeigevorrichtung nach einem der Ansprüche 24 bis 26,
**dadurch gekennzeichnet,**
**dass** eine Schnittstelle zu einem Fahrzeugbus vorgesehen ist, über die Fahrzeugzustandsinformationen übertragbar sind.

28. Anzeigevorrichtung nach einem der Ansprüche 24 bis 27,
**dadurch gekennzeichnet,**
**dass** das Display (1) zur autostereoskopischen Darstellung der Elemente ausgebildet ist.

29. Anzeigevorrichtung nach einem der Ansprüche 24 bis 28,
**dadurch gekennzeichnet,**
**dass** eine Funkschnittstelle (21, 20) zur drahtlosen Übertragung der darstellbaren Elemente vorgesehen ist.

30. Anzeigevorrichtung nach einem der Ansprüche 24 bis 29,
**dadurch gekennzeichnet,**
**dass** manuelle Einstellregler zur Einstellung der Stimmung des Nutzers vorgesehen sind.

31. Anzeigevorrichtung nach Anspruch 30,
**dadurch gekennzeichnet,**
**dass** der Entscheidungsprozessor (5) die Stellung der Einstellregler für die Stimmung des Nutzers bei der Bewertung der Relevanz der in der Karte darstellbaren Elemente berücksichtigt.

## Claims

1. Method for controlling a display device in a motor vehicle, in which
- the display device displays a geographic map with elements which are assigned geographic positions and which are displayed on the displayed map at the geographic positions assigned to them,
- using rules, the relevance for the user of the motor vehicle is evaluated for the elements which can be displayed on the map,
- it is determined how many elements can be displayed on the geographic map which is currently being displayed on the display device,
- the number of elements which can be displayed are displayed automatically in the sequence of their relevance at the geographic positions which are assigned to them,
- wherein a geographic position and a chronological parameter are assigned to at least one element which can be displayed on the map, wherein the chronological parameter of the element relates to opening times and/or starting times,
- wherein the anticipated duration in which the geographic position of the element to which the chronological parameter is assigned can be reached is calculated, and
- wherein a rule for evaluating the relevance of this element comprises the fact that the anticipated arrival time is placed in a relationship with the chronological parameter, with the result that this element is displayed on the map only if the anticipated arrival time is within the opening times or before the starting time, or it is indicated whether the anticipated arrival time is within the opening times or before the starting time.

2. Method according to Claim 1,
**characterized**
**in that** in the case of a further rule, the relevance of the elements which can be displayed and/or the method of displaying the displayed elements depends on contacts and/or appointments of the user.

3. Method according to one of the preceding claims,
**characterized**
**in that** earlier evaluations of the respective elements are taken into account in the evaluation of the elements.

4. Method according to one of the preceding claims,
**characterized**
**in that** a user profile is transmitted, and this user profile is taken into account in a further rule for the evaluation of the elements.

5. Method according to one of the preceding claims,
**characterized**
**in that** the purpose of a journey is determined on the basis of an appointment calendar, and the purpose of the journey which is identified is taken into account in a further rule for the evaluation of the elements.

6. Method according to one of the preceding claims,
**characterized**
**in that** weather information is acquired and/or transmitted, and this weather information is taken into account in a further rule for the evaluation of the elements.

7. Method according to one of the preceding claims,
**characterized**
**in that** the vehicle status information is acquired, and this vehicle status information is taken into account in a further rule for the evaluation of the elements.

8. Method according to one of the preceding claims,
**characterized**
**in that** elements with a relatively high relevance are displayed in a graphically highlighted fashion by means of spatial staggering.

9. Method according to one of the preceding claims,
**characterized**
**in that** elements with a relatively high relevance are displayed spatially closer than elements with a relatively low relevance.

10. Method according to Claim 8 or 9,
**characterized**
**in that** for the purpose of spatial staggering the elements are displayed auto-stereoscopically.

11. Method according to one of Claims 8 to 10,
**characterized**
**in that** for the purpose of spatial staggering elements are displayed in different semi-transparent planes.

12. Method according to one of the preceding claims,
**characterized**
**in that** the elements are read out from a memory which is located in the vehicle.

13. Method according to one of the preceding claims,
**characterized**
**in that** the elements are transmitted over wireless networks.

14. Method according to one of the preceding claims,
**characterized**
**in that** the display device and a computer system connected thereto are controlled on the basis of settings of the user, and in that the settings represent the user's mood.

15. Method according to Claim 14,
**characterized**
**in that** the user's mood is taken into account in the evaluation of the relevance of the elements which can be displayed on the map.

16. Method according to Claim 14 or 15,
**characterized**
**in that** a multiplicity of functions of the computer system are controlled, in that the control of the functions depends on parameters, and in that the parameters are assigned values which are assigned to specific settings of the user's mood, with the result that a setting of the user's mood defines a plurality of parameter values.

17. Method according to one of Claims 14 to 16,
**characterized**
**in that** the user's mood corresponds to the user's expectations of the control of the computer system.

18. Method according to one of Claims 14 to 17,
**characterized**
**in that** the user's mood corresponds to the degree to which the user is interested in the destination and/or purpose of the journey with the motor vehicle.

19. Method according to one of Claims 14 to 18,
**characterized**
**in that** the mood settings represent the user's need for information or entertainment.

20. Method according to one of Claims 14 to 19,
**characterized**
**in that** the mood settings represent the user's need to arrive at the destination.

21. Method according to one of Claims 14 to 20,
**characterized**
**in that** the mood settings represent the user's need to check the computer system.

22. Method according to one of Claims 14 to 21,
**characterized**
**in that** the mood settings represent how much information the user requires.

23. Method according to one of Claims 14 to 22,
**characterized**
**in that** the selection of the displayed elements and/or the type of display of the elements depends on the mood settings.

24. Display device in a motor vehicle having
- a control unit (2),
- a display (1) which is connected to the control unit (2),
- one or more memories (6) for storing data for displaying a geographic map and for storing elements which are assigned geographic positions and which can be displayed on the displayed map at the geographic positions assigned to them,
- means (3) which are coupled to the control unit (2) and for the purpose of calculating the anticipated duration in which the geographic position of this element can be reached,
- a decision processor (5) which is connected to the control unit (2) and with which the relevance of the elements which can be displayed on the map can be evaluated using rules, and on the basis of the result of the evaluation it is possible to decide automatically how many elements and which elements can be displayed on the geographic map currently displayed on the display (1), in the order of their relevance at the geographic positions assigned to them, wherein a chronological parameter is stored in the memory (6) for at least one element which can be displayed on the map, wherein the chronological parameter of the element relates to opening times and/or starting times, wherein a rule for evaluating the relevance of the element forms a relationship between the anticipated arrival time and the chronological parameter, with the result that this element is displayed on the map only if the anticipated arrival time is within the opening times or before the starting time, or it is indicated whether the anticipated arrival time is within the opening times or before the starting time.

25. Display device according to Claim 24,
**characterized**
**in that** contact data and/or appointment data of the user which the decision processor (5) takes into account for the relevance of the elements which can be displayed and/or which the control unit (2) takes into account for the type of display of the elements are stored in the memory (6).

26. Display device according to Claim 24 or 25,
**characterized**
**in that** a user profile is stored in the memory (6).

27. Display device according to one of Claims 24 to 26,
**characterized**
**in that** an interface with a vehicle bus, via which vehicle status information can be transmitted, is provided.

28. Display device according to one of Claims 24 to 27,
**characterized**
**in that** the display (1) is designed for displaying the elements auto-stereoscopically.

29. Display device according to one of Claims 24 to 28,
**characterized**
**in that** a radio interface (21, 20) is provided for wireless transmission of the elements which can be displayed.

30. Display device according to one of Claims 24 to 29,
**characterized**
**in that** manual setting controllers for setting the user's mood are provided.

31. Display device according to Claim 30,
**characterized**
**in that** the decision processor (5) takes into account the setting of the setting controllers for the user's mood in the evaluation of the relevance of the elements which can be displayed on the map.

## Revendications

1. Procédé de commande d'un dispositif d'affichage dans un véhicule automobile, selon lequel
- le dispositif d'affichage affiche une carte géographique avec des éléments auxquels sont associées des positions géographiques et qui sont affichés sur la carte affichée aux positions géographiques qui leur sont associées,
- la pertinence des éléments qui peuvent être représentés sur la carte pour l'utilisateur du véhicule automobile est évaluée à l'aide de règles,
- le nombre d'éléments qui peuvent être affichés sur la carte géographique actuellement affichée sur le dispositif d'affichage est déterminé,
- les éléments sont affichés automatiquement en le nombre pouvant être représenté et dans l'ordre de leur pertinence aux positions géographiques qui leurs sont associées,
- une position géographique et un paramètre temporel étant associés à au moins un élément qui peut être représenté sur la carte, le paramètre temporel de l'élément concernant des heures d'ouverture et/ou des heures de départ,
- la durée estimée dans laquelle peut être atteinte la position géographique de l'élément auquel est associé le paramètre temporel étant calculée,
- une règle d'évaluation de la pertinence de cet élément incluant le fait que l'heure d'arrivée estimée est mise en relation avec le paramètre temporel, de sorte que cet élément n'est représenté sur la carte que si l'heure d'arrivée estimée se trouve durant les heures d'ouverture ou avant l'heure de départ ou qu'il est affiché si l'heure d'arrivée estimée se trouve durant les heures d'ouverture ou avant l'heure de départ.

2. Procédé selon la revendication 1, **caractérisé en ce qu'**avec une autre règle, la pertinence des éléments qui peuvent être représentés et/ou la nature de la représentation des éléments représentés dépendent de contacts et/ou de rendez-vous de l'utilisateur.

3. Procédé selon l'une des revendications précédentes, **caractérisé en ce que** lors de l'évaluation des éléments, des évaluations antérieures des éléments respectifs sont prises en compte.

4. Procédé selon l'une des revendications précédentes, **caractérisé en ce qu'**un profil d'utilisateur est transmis et ce profil d'utilisateur est pris en compte dans une règle supplémentaire lors de l'évaluation des éléments.

5. Procédé selon l'une des revendications précédentes, **caractérisé en ce que** l'objet du voyage est déterminé au moyen d'un agenda et l'objet du voyage déterminé est pris en compte dans une règle supplémentaire lors de l'évaluation des éléments.

6. Procédé selon l'une des revendications précédentes, **caractérisé en ce que** des informations météorologiques sont obtenues et/ou transmises et ces informations météorologiques sont prises en compte dans une règle supplémentaire lors de l'évaluation des éléments.

7. Procédé selon l'une des revendications précédentes, **caractérisé en ce que** des informations sur l'état du véhicule sont obtenues et ces informations sur l'état du véhicule sont prises en compte dans une règle supplémentaire lors de l'évaluation des éléments.

8. Procédé selon l'une des revendications précédentes, **caractérisé en ce que** les éléments ayant une pertinence plus élevée sont représentés sous forme graphique en étant mis en valeur par un échelonnement dans l'espace.

9. Procédé selon l'une des revendications précédentes, **caractérisé en ce que** les éléments ayant une pertinence plus élevée sont représentés plus proches dans l'espace que les éléments ayant une pertinence plus faible.

10. Procédé selon la revendication 8 ou 9, **caractérisé en ce que** les éléments sont représentés sous forme auto-stéréoscopique pour l'échelonnement dans l'espace.

11. Procédé selon l'une des revendications 8 à 10, **caractérisé en ce que** les éléments sont représentés dans différents plans semi-transparents pour l'échelonnement dans l'espace.

12. Procédé selon l'une des revendications précédentes, **caractérisé en ce que** les éléments sont chargés depuis une mémoire qui se trouve dans le véhicule.

13. Procédé selon l'une des revendications précédentes, **caractérisé en ce que** les éléments sont transmis par le biais de réseaux sans fil.

14. Procédé selon l'une des revendications précédentes, **caractérisé en ce que** la commande du dispositif d'affichage et d'un système informatique relié avec celui-ci s'effectue en fonction de réglages de l'utilisateur et que les réglages restituent la disposition de l'utilisateur.

15. Procédé selon la revendication 14, **caractérisé en ce que** la disposition de l'utilisateur est prise en compte lors de l'évaluation de la pertinence des éléments qui peuvent être représentés sur la carte.

16. Procédé selon la revendication 14 ou 15, **caractérisé en ce qu'**une pluralité de fonctions du système informatique sont commandées, que la commande des fonctions dépend de paramètres et que des valeurs sont associées aux paramètres, auxquelles sont associés certains réglages de la disposition de l'utilisateur de sorte qu'un réglage de la disposition de l'utilisateur définit plusieurs valeurs de paramètre.

17. Procédé selon l'une des revendications 14 à 16, **caractérisé en ce que** la disposition de l'utilisateur correspond aux attentes de l'utilisateur envers la commande du système informatique.

18. Procédé selon l'une des revendications 14 à 17, **caractérisé en ce que** la disposition de l'utilisateur correspond au niveau d'intérêt de l'utilisateur pour la destination et/ou l'objet du déplacement avec le véhicule automobile.

19. Procédé selon l'une des revendications 14 à 18, **caractérisé en ce que** les réglages de la disposition restituent le besoin de l'utilisateur en matière d'information ou de divertissement.

20. Procédé selon l'une des revendications 14 à 19, **caractérisé en ce que** les réglages de la disposition restituent le besoin de l'utilisateur d'arriver à la destination.

21. Procédé selon l'une des revendications 14 à 20, **caractérisé en ce que** les réglages de la disposition restituent le besoin de l'utilisateur de contrôler le système informatique.

22. Procédé selon l'une des revendications 14 à 21, **caractérisé en ce que** les réglages de la disposition restituent le nombre d'informations souhaitées par l'utilisateur.

23. Procédé selon l'une des revendications 14 à 22, **caractérisé en ce que** la sélection des éléments représentés et/ou la nature de la représentation des éléments dépendent des réglages de la disposition.

24. Dispositif d'affichage dans un véhicule automobile comprenant
- un module de commande (2),
- un afficheur (1) relié avec le module de commande (2),
- une ou plusieurs mémoires (6) pour mémoriser des données destinées à la représentation d'une carte géographique et pour mémoriser des éléments auxquels sont associées des positions géographiques et qui peuvent être représentés sur la carte affichée aux positions géographiques qui leur sont associées,
- des moyens (3) connectés au module de commande (2) pour calculer la durée estimée dans laquelle peut être atteinte la position géographique de cet élément,
- un processeur de décision (5) relié au module de commande (2), avec lequel la pertinence des éléments qui peuvent être représentés sur la carte peut être évaluée à l'aide de règles et avec lequel il peut être décidé automatiquement en fonction du résultat de l'évaluation combien d'éléments et lesquels peuvent être affichés sur la carte géographique actuellement affichée sur l'afficheur (1) dans l'ordre de leur pertinence aux positions géographiques qui leur sont associées, un paramètre temporel étant mémorisé dans la mémoire (6) pour au moins un élément qui peut être représenté sur la carte, le paramètre temporel de l'élément concernant des heures d'ouverture et/ou des heures de départ, une règle d'évaluation de la pertinence de l'élément mettant l'heure d'arrivée estimée en relation avec le paramètre temporel, de sorte que cet élément n'est affiché sur la carte que si l'heure d'arrivée estimée se trouve durant les heures d'ouverture ou avant l'heure de départ ou qu'il est affiché si l'heure d'arrivée estimée se trouve durant les heures d'ouverture ou avant l'heure de départ.

25. Dispositif d'affichage selon la revendication 24, **caractérisé en ce que** dans la mémoire (6) sont mémorisées des données de contact et/ou des données de rendez-vous de l'utilisateur, lesquelles sont prises en compte par le processeur de décision (5) pour la pertinence des éléments qui peuvent être représentés et/ou qui sont prises en compte par le module de commande (2) pour la nature de la représentation des éléments.

26. Dispositif d'affichage selon la revendication 24 ou 25, **caractérisé en ce qu'**un profil d'utilisateur est enregistré dans la mémoire (6).

27. Dispositif d'affichage selon l'une des revendications 24 à 26, **caractérisé en ce qu'**il est prévu une interface avec un bus de véhicule par le biais de laquelle peuvent être transmises des informations d'état du véhicule.

28. Dispositif d'affichage selon l'une des revendications 24 à 27, **caractérisé en ce que** l'afficheur (1) est configuré pour la représentation auto-stéréoscopique des éléments.

29. Dispositif d'affichage selon l'une des revendications 24 à 28, **caractérisé en ce qu'**il est prévu une interface radioélectrique (21, 20) pour la transmission sans fil des éléments qui peuvent être représentés.

30. Dispositif d'affichage selon l'une des revendications 24 à 29, **caractérisé en ce que** des éléments de réglage manuels sont prévus pour régler la disposition de l'utilisateur.

31. Dispositif d'affichage selon la revendication 30, **caractérisé en ce** le processeur de décision (5) tient compte de la position des éléments de réglage pour la disposition de l'utilisateur lors de l'évaluation de la pertinence des éléments qui peuvent être représentés sur la carte.
